# EUROPÄISCHE PATENTSCHRIFT

(11) **EP 2 850 335 B1**
(45) Veröffentlichungstag und Bekanntmachung des Hinweises auf die Patenterteilung: **04.12.2019**
(21) Anmeldenummer: 13722338.4
(22) Anmeldetag: 02.05.2013
(51) Int. Cl.: B65H 54/52, F16C 27/06, F16C 13/06, F16C 35/077

(54) **VORRICHTUNG ZUM ANDRÜCKEN EINES FADENS AN EINE SPULE**
DEVICE FOR PRESSING A THREAD ONTO A SPOOL
DISPOSITIF SERVANT À PRESSER UN FIL CONTRE UNE BOBINE

(30) Priorität: 16.05.2012 DE 102012104249
(43) Veröffentlichungstag der Anmeldung: 25.03.2015
(73) Patentinhaber: Oerlikon Textile GmbH & Co. KG, 42897 Remscheid (DE)
(72) Erfinder: WALTERMANN, Heinz, 42499 Hückeswagen (DE); KOWALSKI, Jürgen, 59071 Hamm (DE); EBERT, Michael, 13055 Berlin (DE)
(74) Vertreter: KNH Patentanwälte Neumann Heine Taruttis PartG mbB
(86) Internationale Anmeldenummer: PCT/EP2013/059097
(87) Internationale Veröffentlichungsnummer: WO 2013/171073

(56) Entgegenhaltungen:
- WO-A1-03/082720
- WO-A1-2011/012456
- DE-A1- 4 139 923
- DE-A1-102006 053 046
- JP-A- H08 175 752
- JP-A- S61 273 471

## Beschreibung

Die vorliegende Erfindung betrifft eine Vorrichtung zum Andrücken eines Fadens an eine Spule. Darüber hinaus betrifft die Erfindung eine Aufspulmaschine mit einer erfindungsgemäßen Vorrichtung. Die vorliegende Erfindung findet insbesondere Anwendung bei der Herstellung von synthetischen Fäden.

Aus der DE 196 32 748 A1 ist eine Aufspulmaschine mit einer an einem beweglichen Walzenträger gelagerten Andrückwalze bekannt. Die Andrückwalze liegt beim Wickeln der Fäden an den Oberflächen der an einem angetriebenen Spulendorn aufgespannten Spulen an und führt die Fäden zur Ablage an der Oberfläche der Spulen. Gleichzeitig wird die Drehzahl der Andrückwalze zur Regelung des Spulendornantriebs genutzt, um eine konstante Umfangsgeschwindigkeit der stetig anwachsenden Spulen zu erhalten. Um einen gleichmäßigen Spulenaufbau zu erhalten, wird die Andrückwalze mit einer vorbestimmten Anpresskraft an den Oberflächen der Spulen gehalten. Um die aus dem angetriebenen Spulendorn resultierenden Schwingungen zu dämpfen, sind die Lagerungen der Andrückwalze mit einem Dämpfungsmittel ausgebildet. Als Dämpfungsmittel werden hierzu O-Ringe eingesetzt, um einen Außenring eines Lagers gegenüber dem Walzenträger abzustützen. Derartige Gummielemente besitzen jedoch eine über die Lebenszeit alterungsbedingt stark schwankende Feder-DämpferCharakteristik. Zudem ist zu berücksichtigen, dass die Gummielemente üblicherweise in Nuten geführt werden, so dass das aus mehreren nebeneinander angeordnete Gummielementen bestehende Dämpfungsmittel eine gewisse Breite aufweist, die eine relativ hohe Nicksteifigkeit bewirkt. Aufgrund der Einspannung zwischen der Andrückwalze und dem Walzenträger ist die Aufnahme des Gummielementes zudem abhängig von der Relativlage der Andrückwalze zu dem Walzenträger, so dass die Steifigkeit des Gummielementes nicht konstant ist und sehr stark schwanken kann. Nun wurde beobachtet, dass die beim Wickeln der Spulen auftretenden Schwingungen sowie die Belastungen der Andrückwalze dazu führen, dass sich zwischen dem Walzenträger und der Lagerung der Andrückwalze konstante oder zeitlich veränderliche Schiefstellungen der Mittelachsen einstellen können. Aufgrund der hohen und schwankenden Nicksteifigkeiten der Gummielemente verursachen derartige Schiefstellungen der Mittelachsen jedoch eine sehr ungleichmässige Belastung der Laufbahnen der mehrreihigen Lager. Zudem sind die bekannten O-Ringe nicht dazu geeignet, die Andrückwalzen relativ zum Walzenträger axial, das heißt parallel zu einer Rotationsachse der Andrückwalze, zu befestigen, so dass bei den bekannten Vorrichtungen zum Andrücken eines Fadens die Andrückwalzen mit zumindest einem Festlager an dem Walzenträger gelagert werden müssen. Dies hat den Nachteil, dass zwischen der Andrückwalze und dem Walzenträger zumindest in einer axialen Richtung der Andrückwalze eine starre Verbindung besteht, so dass Steifigkeiten der Gummielemente auf beiden Seiten der Andrückwalze sehr unterschiedlich sein können, was sich sehr negativ auf die Stabilität des Spulendorns auswirkt und das subharmonische, selbsterregte Taumeln des Spulendorns begünstigt. Grundsätzlich neigen zwei aufeinander abwälzende Rotationskörper zur Selbsterregung, so dass in dem Betriebsbereich der Andrückwalze die erzeugte Dämpfung stets der Anregung überwiegen sollte.

Durch JP H08 175752 A ist eine Vorrichtung zum Andrücken eines Fadens an eine Spule gemäß dem Oberbegriff des Anspruchs 1 bekannt. Die Andrückwalze ist drehbar mit Lagern in entsprechenden Aufnahmen des Walzenträgers gelagert. Die Andrückwalze ist in mehrere gelagerte Abschnitte unterteilt, wodurch eine Veränderung der kritischen Drehzahl erreicht wird. Durch entsprechende strukturelle Änderungen der Andrückwalze in mehrere gelagerte Abschnitte soll die Eigenfrequenz der Andrückwalze verändert werden.

Aufgabe der Erfindung ist es daher, die mit Bezug auf den Stand der Technik geschilderten Probleme zumindest teilweise zu lösen und insbesondere eine Vorrichtung zum Andrücken eines Fadens an eine Spule anzugeben, mit der Schwingungen an einer Andrückwalze besonders effektiv gedämpft werden können. Darüber hinaus soll auch eine Aufspulmaschine angegeben werden, die eine Vorrichtung zum Andrücken eines Fadens an eine Spule aufweist, mit der Schwingungen an einer Andrückwalze besonders effektiv gedämpft werden können.

Diese Aufgaben werden gelöst mit einer Vorrichtung gemäß den Merkmalen des Patentanspruchs 1 und einer Aufspulmaschine gemäß den Merkmalen des Patentanspruchs 13. Weitere vorteilhafte Ausgestaltungen der Erfindung sind in den abhängig formulierten Patentansprüchen angegeben. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Bei den anzudrückenden Fäden handelt es sich insbesondere um synthetische Fäden, die mit einer Geschwindigkeit von bis zu 7.000 m/min. auf eine Spule aufgewickelt werden. Die Andrückwalze besteht bevorzugt aus Metall und weist einen rotationssymmetrischen Querschnitt auf. Die Andrückwalze kann sowohl aus einem Vollmaterial als auch aus einem Hohlprofil gefertigt sein. Die Andrückwalze weist an ihrer Oberfläche einen Fadenführungsabschnitt auf, bei dem es sich um einen Bereich der Andrückwalze handelt, mit dem der Faden geführt bzw. an eine Oberfläche einer Spule angedrückt wird. Die Andrückwalze weist im Bereich des Fadenführungsabschnitts einen Durchmesser von 50 mm bis 150 mm, bevorzugt 70 mm bis 100 mm auf. Der Fadenführungsabschnitt weist eine axiale Länge von 600 mm bis 2400 mm auf. Darüber hinaus weist die Andrückwalze ein erstes Ende mit einem ersten Lagerabschnitt, der in einer ersten Aufnahme des Walzenträgers gelagert ist, und ein zweites Ende mit einem zweiten Lagerabschnitt, der in einer zweiten Aufnahme des Walzenträgers gelagert ist, auf. Die Lagerabschnitte sind bevorzugt nach Art eines Lagerzapfens ausgebildet. Die Lagerabschnitte haben in einer axialen Richtung der Andrückwalze eine Länge von 20 mm bis 50 mm, bevorzugt 30 mm bis 50 mm. Der Walzenträger besteht ebenfalls aus Metall. Der Walzenträger ist vorzugsweise als eine Schwinge ausgeführt, die schwenkbar an einem Maschinengestell gehalten ist und die an zumindest einem freien Ende zumindest eine Aufnahme für die Andrückwalze aufweist. Die Aufnahmen können insbesondere nach Art einer Lagerbohrung ausgebildet sein. Die Andrückwalze weist im Bereich des ersten Lagerabschnitts ein erstes Lager mit einer Außenfläche und im Bereich des zweiten Lagerabschnitts ein zweites Lager mit einer Außenfläche auf. Bei dem Lager kann es sich insbesondere um ein Wälzlager, z. B. nach Art eines Kugellagers, handeln. Im Falle eines Wälzlagers umfasst das Lager bevorzugt einen Innenring und einen Außenring mit dazwischen angeordneten Wälzkörpern. Bei der Außenfläche kann es sich insbesondere um eine Außenfläche des Außenrings des Lagers handeln kann. Auf der Außenfläche des ersten Lagers und des zweiten Lagers ist jeweils ein Feder-Dämpfer-Element angeordnet angeordnet. Jedes Feder-Dämpfer-Element ist dafür ausgebildet, Schwingungen der Andrückwalze teilweise oder sogar vollständig zu dämpfen. Das Feder-Dämpfer-Element ist hierzu zumindest teilweise elastisch. So kann das Feder-Dämpfer-Element zumindest teilweise aus Gummi ausgeführt sein. Die Andrückwalze ist mit den Lagern und den Feder-Dämpfer-Elementen in den Aufnahmen des Walzenträgers drehbar gelagert. Darüber hinaus ist jedes Feder-Dämpfer-Element dazu ausgebildet, die Andrückwalze relativ zum Walzenträger radial und axial schwingungsgedämpft zu befestigen. Hierunter ist insbesondere zu verstehen, dass das jedes Feder-Dämpfer-Element derart ausgebildet ist, die regelmäßig auf die Andrückwalze beim Andrücken eines Fadens an eine Spule auftretenden Kräfte sowohl radial als auch axial auf den Walzenträger zu übertragen, ohne das hierfür weitere Festlager der Andrückwalze erforderlich sind. Die Lagerung der Andrückwalze ist daher bevorzugt nach Art einer schwimmenden Stützlagerung ausgebildet, wobei jedes Feder-Dämpfer-Element eine Dämpfung in allen Richtungen der Andrückwalze bereitstellt. Das Spiel der Andrückwalze in axialer Richtung ist durch jedes Feder-Dämpfer-Element infolge dessen ausreichend großen Steifigkeit in der axialen Richtung reduziert. Axial befestigt bedeutet in diesem Zusammenhang, dass die regelmäßig beim Andrücken eines Fadens an eine Spule auftretenden Kräfte in einer axialen Richtung, das heißt parallel zu einer Rotationsachse der Andrückwalze, auf den Walzenträger übertragen werden können. Radial befestigt bedeutet insbesondere, dass die regelmäßig beim Andrücken eines Fadens an eine Spule auftretenden Kräfte in eine radiale Richtung, das heißt insbesondere orthogonal zu der Rotationsachse der Andrückwalze, auf den Walzenträger übertragen werden können. Jedes Feder-Dämpfer-Element ist somit ausgebildet und dazu bestimmt, die Andrückwalze relativ zum Walzenträger radial und axial zu fixieren, so dass Schwingungen der Andrückwalze durch die Feder-Dämpfer-Elemente radial und axial dämpfbar sind, wobei die elastische Steifigkeit der Feder-Dämpfer-Elemente die nötige Stabilität zur axialen und radialen Befestigung der Andrückwalze bedingt.

Jedes Feder-Dämpfer-Element weist eine zwischen einer inneren Hülse und einer äußeren Hülse angeordnete elastische Schicht auf. Bei der elastischen Schicht handelt es sich insbesondere um ein Elastomer, z. B. Gummi, wobei die elastische Schicht zwischen der inneren Hülse und der äußeren Hülse eine Vorspannung zur Steigerung der Lebensdauer der elastischen Schicht aufweisen kann. Die elastische Schicht ist fest mit der inneren Hülse und der äußeren Hülse zu einem Bauteil verbunden, so dass der Einbauraum allein durch die Abmessungen der Hülsen bestimmt ist. Damit ist eine definierte Positionierung der Andrückwalze relativ zum Walzenträger auch bei sehr langen Andrückwalzen ohne negativen Einfluss auf die Eigenschaften des Feder-Dämpfer-Elementes möglich.

Je nach Anwendungsfall, ob textile Fäden in einem POY-Prozess oder FDY-Prozess oder technische Fäden in einem IDY-Prozess oder BCF-Prozess zu Spulen gewickelt werden, kommen unterschiedliche Aufspulmaschinen zum Einsatz. Dabei hat sich die Ausführung der Erfindung besonders bewährt, bei welcher die elastische Schicht im vorgespannten Zustand zwischen der inneren Hülse und der äußeren Hülse eine Radialsteifigkeit im Bereich von 1000 N/mm bis 8000 N/mm aufweist. Damit können selbsterregte Schwingungen in den für die Betriebsdrehzahlen maßgeblichen Frequenzbereich mit kleinen oder großen Amplituden ausreichend gedämpft werden. Die axiale Fixierung der Andrückwalze lässt sich für diese Anwendungsfälle insbesondere durch eine Axialsteifigkeit der elastischen Schicht im Bereich von 150 N/mm bis 1200 N/mm gewährleisten.

Die innere Hülse und die äußere Hülse sind vorzugsweise aus Metall hergestellt und weisen einen kreisförmigen Querschnitt auf. Jedes Feder-Dämpfer-Element weist einen Innendurchmesser von 20 mm bis 80 mm, bevorzugt 40 mm bis 60 mm auf. Die innere Hülse kann insbesondere durch eine Klebeverbindung auf der Außenfläche des Lagers und die äußere Hülse durch eine Presspassung mit der Aufnahme des Walzenträgers befestigt sein.

Um eine Überbelastung eines jeden Feder-Dämpfer-Elementes zu vermeiden, ist gemäß der Erfindung vorgesehen, die elastische Beweglichkeit des Feder-Dämpfer-Elementes mechanisch zu begrenzen. Hierzu ist zumindest ein an der inneren Hülse angeordneter elastischen Federanschlag gegenüber der äußeren Hülse vorgesehen. So können neben den reinen radialen Schwingungsbewegungen insbesondere auch kardanische Bewegungen innerhalb des Feder-Dämpfer-Elementes abgefangen werden.

Die Wirkung des Feder-Dämpfer-Elementes an der Andrückwalze wird im Wesentlichen auch durch den Einbau und die Anordung innerhalb der Aufnahmen des Walzenträgers bestimmt. Um die voreingestellte Feder-Dämpfer-Charakteristik an dem Feder-Dämpfer-Element zu erhalten, ist die Ausführung der Erfindung besonders vorteilhaft, bei welcher jede Aufnahme des Walzenträgers eine mit dem Walzenträger lösbar verbundene Lagerhalbschale aufweist. Damit lässt sich ein Presssitz zwischen äußerer Hülse und dem Walzenträger auf einfach Weise beispielsweise durch ein Anschrauben der Lagerhalbschale an den Walzenträger realisieren.

Bei einer weiteren zweckmäßigen Ausführungsform weist jedes Feder-Dämpfer-Element an der Außenfläche des Lagers eine Auflagefläche mit einer Länge von 5 mm bis 50 mm in einer axialen Richtung der Andrückwalze auf. Es hat sich herausgestellt, dass eine solche Ausgestaltung der Feder-Dämpfer-Elemente besonders geeignet ist eine sichere Verbindung zwischen der Außenfläche des Lagers und dem Feder-Dämpfer-Element herzustellen.

Bei einer besonders bevorzugten Ausführungsform ist jedes Feder-Dämpfer-Element in der axialen Richtung der Andrückwalze im Wesentlichen mittig auf der Außenfläche des Lagers angeordnet. Hierzu weist das Feder-Dämpfer-Element in einer axialen Richtung der Andrückwalze eine Länge auf, die kleiner als eine Länge des Lagers in der axialen Richtung der Andrückwalze ist. Sowohl die Achse der Andrückwalze als auch eine Bohrungs-Achse der Aufnahme des Walzenträgers können sich infolge von Vibration oder infolge von Fertigungstoleranzen gegeneinander neigen. Um trotzdem eine möglichst gleichmäßige Belastung des Lagers, insbesondere zweier Kugellaufbahnen eines Kugellagers, zu gewährleisten, ist eine axiale Länge, das heißt in der axialen Richtung der Andrückwalze, des Elastomers des Feder-Dämpfer-Elements klein zu halten. Unter "klein" ist hierbei insbesondere eine Länge von 1 bis 10 mm zu verstehen. Jedes Feder-Dämpfer-Element weist hierdurch eine geringe Nicksteifigkeit, beziehungsweise eine hohe kardanische Auslenkbarkeit auf, so dass eine gegenseitige Neigung der Rotationsachse der Andrückwalze und der Bohrungs-Achse der Aufnahme des Walzenträgers durch ein Nicken innerhalb des Feder-Dämpfer-Elements kompensiert werden kann. Durch die mittige Anordnung des Feder-Dämpfer-Elements auf der Außenfläche des Lagers wird das Lager zudem in vorteilhafter weise gleichmäßig belastet. Die Anordnung von O-Ringen über die gesamte Lagerbreite hat demgegenüber zu einer ungleichmäßigen Belastung und dadurch zu einem vorzeitigen Verschleiß der Lager geführt.

Ebenfalls vorteilhaft ist es, wenn die Andrückwalze ein erstes Ende mit einem ersten Lagerabschnitt und ein zweites Ende mit einem zweiten Lagerabschnitt aufweist, wobei im ersten Lagerabschnitt ein erstes Feder-Dämpfer-Element und im zweiten Lagerabschnitt ein zweites Feder-Dämpfer-Element angeordnet ist und wobei das erste Feder-Dämpfer-Element eine geringere elastische Steifigkeit aufweist als das zweite Feder-Dämpfer-Element. Bei dem ersten Ende der Andrückwalze kann es sich bspw. um eine Antriebsseite und bei dem zweiten Ende um eine Geberradseite der Andrückwalze handeln. Aufgrund der Konstruktion eines Spulenkopfs einer Aufspulmaschine können unterschiedliche Lagerungssteifigkeiten an dem ersten Ende und dem zweiten Ende der Andrückwalze auftreten. Diese unterschiedlichen Lagerungssteifigkeiten können durch eine geringere elastische Steifigkeit des ersten Feder-Dämpfer-Elements im Vergleich zu einer elastischen Steifigkeit des zweiten Feder-Dämpfer-Elements kompensiert werden, so dass eine effektive Lagerungssteifigkeit der Andrückwalze an dem ersten Ende und dem zweiten Ende im Wesentlichen gleich ist.

In Weiterbildung der Erfindung wird vorgeschlagen, dass die Außenfläche jedes Lagers eine Nut aufweist, die zur Aufnahme eines elektrischen Leiters dient, wobei der elektrische Leiter eine elektrisch leitfähige Verbindung zwischen dem Lager und dem Walzenträger herstellt, so dass eine elektrostatische Aufladung der Andrückwalze verhinderbar ist. Bei dem elektrischen Leiter kann es sich insbesondere um eine Achteckfeder und/oder eine Schraubenfeder handeln.

Ebenfalls vorteilhaft ist es, wenn jedes Lager ausgehend von einem Ende der Andrückwalze einen ersten Außendurchmesserbereich mit einem ersten Durchmesser, einen zweiten Außendurchmesserbereich mit einem zweiten Durchmesser, einen dritten Außendurchmesserbereich mit einem dritten Durchmesser und einen vierten Außendurchmesserbereich mit einem vierten Durchmesser aufweist und wobei zwischen dem dritten Außendurchmesserbereich und dem vierten Außendurchmesserbereich eine erste Stufe als Anschlag für einen Schutzring dient. Bei dem Schutzring handelt es sich um einen metallischen Ring, der bevorzugt auf der Außenfläche des Lagers angeordnet ist, so dass das Lager vor dem Eintreten von Fadenresten geschützt ist.

Besonders vorteilhaft ist es, wenn die Vorrichtung mindestens einen Schutzring mit einem Anschlagsbereich aufweist, wobei der mindestens eine Schutzring bei einer Verschiebung der Andrückwalze in einer axialen Richtung der Andrückwalze mit dem Walzenträger in Kontakt kommt, so dass eine weitere Verschiebung der Andrückwalze verhindert wird. Jedes Feder-Dämpfer-Element ist derart ausgelegt, dass dieses die regelmäßig auftretenden Kräfte in einer axialen Richtung der Andrückwalze auf den Walzenträger übertragen kann, ohne dass sich die Andrückwalze aus einem Toleranzbereich axial verschiebt. Klarzustellen ist hier, dass jedes Feder-Dämpfer-Element die Andrückwalze durch seine Elastizität bei einer Entlastung der Andrückwalze wieder in eine axiale Ausgangsposition verstellt. Treten jedoch große axial wirkende Sonderlasten auf, kommt der Anschlagsbereichs des mindestens einen Schutzrings mit dem Walzenträger in Kontakt und verhindert dadurch eine weitere Verschiebung der Andrückwalze über den Toleranzbereich hinaus, um eine Beschädigung des Feder-Dämpfer-Elements zu verhindern. Insbesondere ist es vorteilhaft, wenn auf der Außenfläche des ersten Lagers ein erster Schutzring und auf der Außenfläche des zweiten Lagers ein zweiter Schutzring angeordnet ist. Der Anschlagsbereich des ersten Schutzrings kontaktiert den Walzenträger insbesondere bei einer axialen Verschiebung der Andrückwalze von 1,5 mm und der Anschlagsbereich des zweiten Schutzrings kontaktiert den Walzenträger insbesondere bei einer axialen Verschiebung der Andrückwalze von 2 mm.

Schließlich wird auch eine Aufspulmaschine aufweisend eine Vorrichtung der vorstehend beschriebenen Art vorgeschlagen.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, diese jedoch nicht darauf beschränkt ist. Es zeigen schematisch:
- Fig. 1:: ein Ausführungsbeispiel einer Aufspulmaschine mit einer erfindungsgemäßen Vorrichtung in einer Frontansicht,
- Fig. 2:: das Ausführungsbeispiel der Aufspulmaschine mit der erfindungsgemäßen Vorrichtung in einer Seitenansicht,
- Fig. 3:: eine Schnittdarstellung des Ausführungsbeispiels der erfindungsgemäßen Vorrichtung, und
- Fig. 4:: eine Detailansicht des Ausführungsbeispiels der erfindungsgemäßen Vorrichtung.

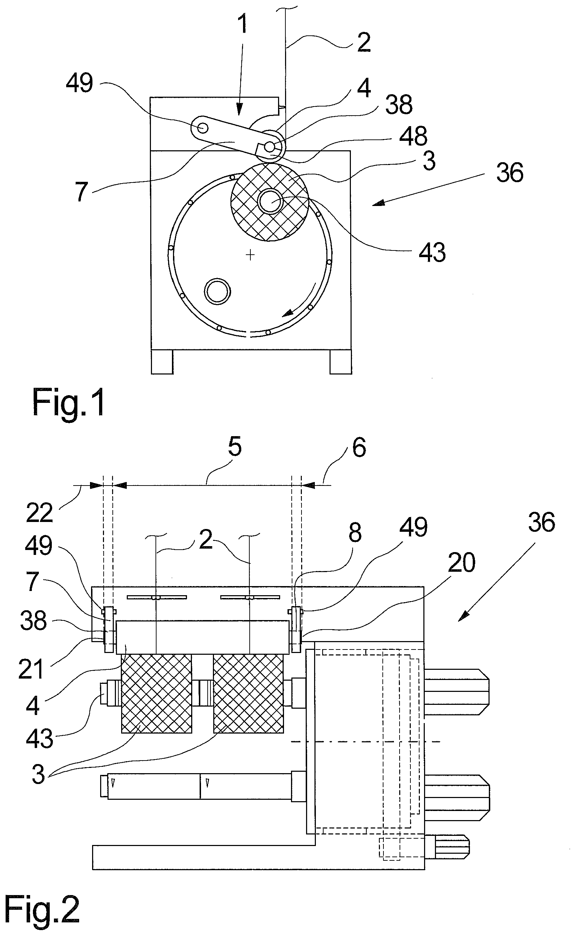

Fig. 1 zeigt eine Aufspulmaschine 36 mit einer Vorrichtung 1 zum Andrücken von Fäden 2 an Spulen 3. Die Vorrichtung 1 weist eine Andrückwalze 4 auf, die über einen beweglichen Walzenträger 7 mit der Aufspulmaschine 36 verbunden ist. Der Walzenträger 7 ist als eine Schwinge ausgebildet, die über ein Schwenklager 49 an der Aufspulmaschine 36 gehalten wird. An dem freien Ende des Walzenträgers 7 ist die Andrückwalze 4 gehalten. Die Andrückwalze 4 drückt die Fäden 2 auf eine Oberfläche der Spulen 3, die auf einem Spulendorn 43 drehbar gelagert sind.

Fig. 2 zeigt die Aufspulmaschine 36 der Fig. 1 in einer Seitenansicht. Zu erkennen ist die Andrückwalze 4 mit einem Fadenführungsabschnitt 5, in dem zwei Fäden 2 jeweils auf eine Spule 3 aufgewickelt werden. Die Andrückwalze 4 weist zudem an einem ersten Ende 20 einen ersten Lagerabschnitt 6 auf, der in einer ersten Aufnahme 8 des Walzenträgers 7 gelagert ist. Zudem weist die Andrückwalze 4 an einem zweiten Ende 21 einen zweiten Lagerabschnitt 22 auf, der in einer zweiten Aufnahme 38 des Walzenträgers 7 gelagert ist. Die erste Aufnahme 8 des Walzenträgers 7 weist eine erste Lagerhalbschale 47 und die zweite Aufnahme 38 des Walzenträgers 7 weist eine zweite Lagerhalbschale 48 auf, wie noch später genauer erläutert wird. Die Lagerhalbschalen 47 und 48 sind fest mit dem Walzenträger 7 verbunden

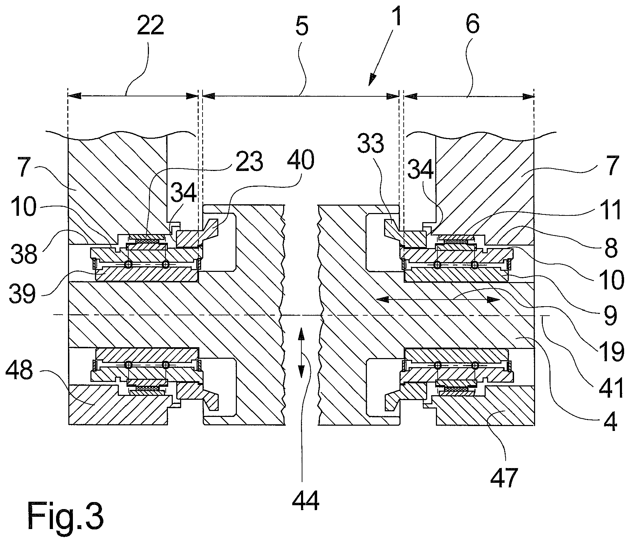

Fig. 3 zeigt die Vorrichtung 1 zum Andrücken von hier nicht gezeigten Fäden 2 an hier nicht gezeigte Spulen 3. Die Andrückwalze 4 weist in dem ersten Lagerabschnitt 6, dem Fadenführungsabschnitt 5 und dem zweiten Lagerabschnitt 22 einen rotationssymmetrischen Querschnitt auf, wie sich durch die angedeutete (Rotations-)Achse 41 erkennen lässt. In dem ersten Lagerabschnitt 6, der hier als Lagerzapfen ausgebildet ist, ist ein erstes Lager 9 angeordnet. Bei dem hier gezeigten ersten Lager 9 handelt es sich um ein Kugellager mit zwei Kugellaufbahnen. In dem zweiten Lagerabschnitt 22 ist ein zu dem ersten Lager 9 identisches zweites Lager 39 angeordnet, wobei die Lager (9, 39) spiegelverkehrt zueinander eingebaut sind. Die Beschreibung des ersten Lagers 9 gilt daher ebenfalls entsprechend für das zweite Lager 39. Auf der Außenfläche 10 des ersten Lagers 9 ist ein erstes Feder-Dämpfer-Element 11 angeordnet. Entsprechend ist auf der Außenfläche 10 des zweiten Lagers 39 ein zweites Feder-Dämpfer-Element 23 angeordnet. Sowohl das erste Feder-Dämpfer-Element 11 als auch das zweite Feder-Dämpfer-Element 23 sind dazu ausgebildet, Schwingungen der Andrückwalze 4 sowohl in eine radiale Richtung 44 als auch in einer axialen Richtung 19 relativ zur (Rotations-)Achse 41 zu dämpfen. Die Andrückwalze 4 ist über das erste Lager 9 und das erste Feder-Dämpfer-Element 11 in der ersten Aufnahme 8 des Walzenträgers 7 und entsprechend über das zweite Lager 39 und dem zweiten Feder-Dämpfer-Element 23 in der zweiten Aufnahme 38 des Walzenträgers 7 gelagert. Die erste Aufnahme 8 ist zwischen dem Walzenträger 7 und der ersten Lagerhalbschale 47 und die zweite Aufnahme 38 zwischen dem Walzenträger 7 und der zweiten Lagerhalbschale 48 gebildet. Die erste Lagerhalbschale 47 und die zweite Lagerhalbschale 48 sind mit dem Walzenträger 7 fest verbunden.

Zudem ist auf der Außenfläche 10 des ersten Lagers 9 ein erster Schutzring 33 und auf der Außenfläche 10 des zweiten Lagers 39 ein zweiter Schutzring 40 angeordnet. Der erste Schutzring 33 und der zweite Schutzring 40 verhindern, dass Fadenreste vom Fadenführungsabschnitt 5 in das erste Lager 9 oder in das zweite Lager 39 eindringen können und diese beschädigen. Sowohl der erste Schutzring 33 als auch der zweite Schutzring 40 weisen jeweils einen Anschlagsbereich 34 auf, um bei einer ungewünschten axialen Verschiebung der Andrückwalze 7 beispielsweise bei einem Ausfall des Feder-Dämpfer-Elementes 11 einen sicheren Halt der Lager 9 oder 39 in den Aufnahmen 8 oder 38 des Walzenträgers 7 zu gewährleisten.

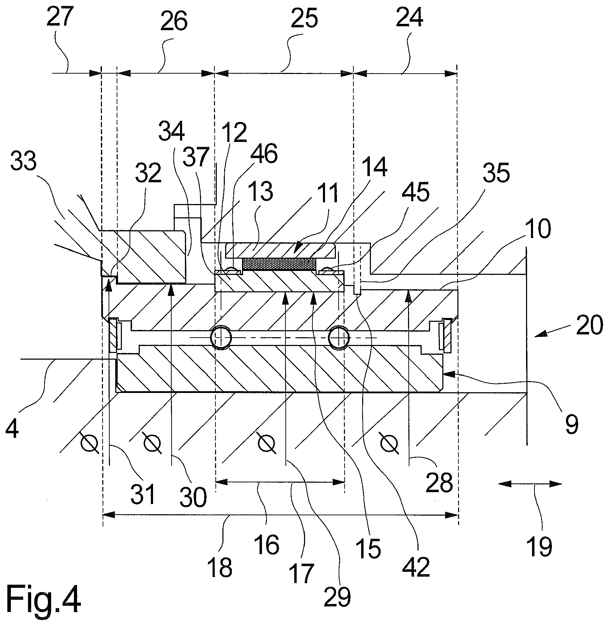

Fig. 4 zeigt eine Detailansicht eines Profilquerschnitts des ersten Lagers 9 und des ersten Feder-Dämpfer-Elements 11, entsprechend des oberen rechten Bereichs der Fig. 3. Das erste Feder-Dämpfer-Element 11 weist eine zwischen einer inneren Hülse 12 und einer äußeren Hülse 13 angeordnete elastische Schicht 14 auf. Die elastische Schicht 14, die vorzugsweise als ein vulkanisierter Gummi zwischen den Hülsen 12 und 13 gebildet ist, weist eine auf den jeweiligen Anwendungsfall hin vorgewählte elastische Steifigkeit auf, um die radiale und axiale Fixierung der Andrückwalze an dem Walzenträger zu gewährleisten. So liegen die gewählten Radialsteifigkeiten in einem Bereich von 1000 N/mm bis 8000 N/mm und die Axialsteifigkeiten in einem Bereich von 150 N/mm und 1200 N/mm.

Die elastische Schicht 14 erstreckt sich nicht über die gesamte Hülsenbreite der Hülsen 12 und 13. Seitlich neben der elastischen Schicht 14 sind an der inneren Hülse 12 zwei Federanschläge 45 und 46 gegenüberliegend zur äußeren Hülse 13 ausgebildet. Die Federanschläge 45 und 46 sind aus einem elastischen Material ausgeführt, das im Vergleich zur elastischen Schicht 14 eine wesentlich höhere Steifigkeit aufweist. Die Federanschläge 45 und 46 an dem Feder-Dämpfer-Element 11 begrenzen die radiale Beweglichkeit sowie die Nickbeweglichkeit in den Lagerstellen.

Die Kontaktfläche zwischen der inneren Hülse 12 und der Außenfläche 10 des ersten Lagers 9 bildet eine Auflagefläche 15, die in der axialen Richtung 19 eine erste axiale Länge 16 aufweist. Die erste axiale Länge 16 der Auflagefläche 15 des Lagers 9 ist in diesem Ausführungsbeispiel gleich lang wie eine zweite Länge 17 des ersten Feder-Dämpfer-Elements 11 in der axialen Richtung 19 der Andrückwalze 4. Das erste Lager 9 weist in der axialen Richtung 19 der Andrückwalze 4 eine dritte Länge 18 auf, wobei die zweite Länge 17 kleiner ist als die dritte Länge 18. Das erste Feder-Dämpfer-Element 11 ist in der axialen Richtung 19 der Andrückwalze 4 im Wesentlichen mittig auf der Außenfläche 10 des ersten Lagers 9 angeordnet. Ausgehend von dem ersten Ende 20 der Andrückwalze 4 weist das erste Lager 9 einen ersten Außendurchmesserbereich 24, einen zweiten Außendurchmesserbereich 25, einen dritten Außendurchmesserbereich 26 und einen vierten Außendurchmesserbereich 27 auf. Der erste Außendurchmesserbereich 24 weist einen ersten Durchmesser 28 auf, der zweite Außendurchmesserbereich 25 weist einen zweiten Durchmesser 29 auf, der dritte Außendurchmesserbereich 26 weist einen dritten Durchmesser 30 auf und der vierte Außendurchmesserbereich 27 weist einen vierten Durchmesser 31 auf. Zwischen dem dritten Außendurchmesserbereich 26 und dem vierten Außendurchmesserbereich 27 dient eine erste Stufe 32 als Anschlag für den ersten Schutzring 33. Zwischen dem zweiten Außendurchmesserbereich 25 und dem dritten Außendurchmesserbereich 26 dient eine zweite Stufe 37 als Anschlag für das erste Feder-Dämpfer-Element 11. Darüber hinaus weist die Außenfläche 10 des ersten Lagers 9 eine Nut 42 auf, die der Aufnahme eines elektrischen Leiters 35 dient. Die Ausführungen zu dem ersten Lager 9, dem ersten Feder-Dämpfer-Element 11 und dem ersten Schutzring 33 sind entsprechend auf das zweite Lager 39, das zweite Feder-Dämpfer-Element 23 und den zweiten Schutzring 40 übertragbar.

Die Vorliegende Erfindung zeichnet sich durch eine besonders effektive Dämpfung der Schwingungen der Andrückwalze aus.

### Bezugszeichenliste

- 1: Vorrichtung
- 2: Faden
- 3: Spule
- 4: Andrückwalze
- 5: Fadenführungsabschnitt
- 6: erster Lagerabschnitt
- 7: Walzenträger
- 8: erste Aufnahme
- 9: erstes Lager
- 10: Außenfläche
- 11: erstes Feder-Dämpfer-Element
- 12: innere Hülse
- 13: äußere Hülse
- 14: elastische Schicht
- 15: Auflagefläche
- 16: erste axiale Länge
- 17: zweite axiale Länge
- 18: dritte axiale Länge
- 19: axiale Richtung
- 20: erstes Ende
- 21: zweites Ende
- 22: zweiter Lagerabschnitt
- 23: zweites Feder-Dämpfer-Element
- 24: erster Außendurchmesserbereich
- 25: zweiter Außendurchmesserbereich
- 26: dritter Außendurchmesserbereich
- 27: vierter Außendurchmesserbereich
- 28: erster Durchmesser
- 29: zweiter Durchmesser
- 30: dritter Durchmesser
- 31: vierter Durchmesser
- 32: erste Stufe
- 33: erster Schutzring
- 34: Anschlagsbereich
- 35: elektrischer Leiter
- 36: Aufspulmaschine
- 37: zweite Stufe
- 38: zweite Aufnahme
- 39: zweites Lager
- 40: zweiter Schutzring
- 41: (Rotations-)Achse
- 42: Nut
- 43: Spulendorn
- 44: radiale Richtung
- 45: erster Federanschlag
- 46: zweiter Federanschlag
- 47: erste Lagerhalbschale
- 48: zweite Lagerhalbschale
- 49: Schwenklager

## Patentansprüche

1. Vorrichtung (1) zum Andrücken eines Fadens (2) an eine Spule (3), aufweisend eine Andrückwalze (4) mit einem Fadenführungsabschnitt (5) sowie einen Walzenträger (7), wobei die Andrückwalze (4) ein erstes Ende (20) mit einem ersten Lagerabschnitt (6), der in einer ersten Aufnahme (8) des Walzenträgers (7) gelagert ist, und ein zweites Ende (21) mit einem zweiten Lagerabschnitt (22), der in einer zweiten Aufnahme (9) des Walzenträgers (7) gelagert ist, aufweist,
wobei die Andrückwalze (4) im Bereich des ersten Lagerabschnitts (6, 22) ein erstes Lager (9) mit einer Außenfläche (10) und im Bereich des zweiten Lagerabschnitts (22) ein zweites Lager (39) mit einer Außenfläche (10) aufweist,
wobei auf der Außenfläche (10) des ersten Lagers (9, 39) und des zweiten Lagers (39) jeweils ein Feder-Dämpfer-Element (11, 23) angeordnet ist,
wobei die Andrückwalze (4) drehbar mit den Lagern (9, 39) und den Feder-Dämpfer-Elementen (11, 23) in den Aufnahmen (8, 38) des Walzenträgers (7) gelagert ist,
wobei jedes Feder-Dämpfer-Element (11, 23) ausgebildet ist, die Andrückwalze (4) relativ zum Walzenträger (7) radial und axial mit einer elastischen Steifigkeit zu befestigen,
**dadurch gekennzeichnet, dass** jedes Feder-Dämpfer-Element (11, 23) eine zwischen einer inneren Hülse (12) und einer äußeren Hülse (13) angeordnete elastische Schicht (14) aufweist und
dass jedes Feder-Dämpfer-Element zumindest einen an der inneren Hülse (12) angeordneten elastischen Federanschlag (45, 46) gegenüber der äußeren Hülse (13) aufweist.

2. Vorrichtung nach Patentanspruch 1, wobei die elastische Schicht (14) eine vorbestimmte Radialsteifigkeit im Bereich von 1000 N/mm bis 8000 N/mm aufweist.

3. Vorrichtung nach Patentanspruch 1 oder 2, wobei die elastische Schicht (14) eine vorbestimmte Axialsteifigkeit im Bereich von 150 N/mm bis 1200 N/mm aufweist.

4. Vorrichtung nach einem der vorherigen Patentansprüche, wobei jede Aufnahme (8, 38) des Walzenträgers (7) eine mit dem Walzenträger (7) lösbar verbundene Lagerhalbschale (47, 48) aufweist.

5. Vorrichtung (1) nach einem der vorherigen Patentansprüche, wobei
jedes Feder-Dämpfer-Element (11, 23) an der Außenfläche (10) des Lagers (9) eine Auflagefläche (15) mit einer Länge (16) in einer axialen Richtung (19) der Andrückwalze (4) von 5 mm bis 50 mm aufweist.

6. Vorrichtung (1) nach einem der vorherigen Patentansprüche, wobei jedes
Feder-Dämpfer-Element (11, 23) in der Axialrichtung (19) der Andrückwalze (4) im Wesentlichen mittig auf der Außenfläche (10) des Lagers (9, 39) angeordnet ist.

7. Vorrichtung (1) nach einem der vorherigen Patentansprüche, wobei im ersten Lagerabschnitt (6) ein erstes Feder-Dämpfer-Element (11) und im zweiten Lagerabschnitt (22) ein zweites Feder-Dämpfer-Element (23) angeordnet ist und wobei das erste Feder-Dämpfer-Element (11) eine geringere elastische Steifigkeit aufweist als das zweite Feder-Dämpfer-Element (23).

8. Vorrichtung (1) nach einem der vorherigen Patentansprüche, wobei die Außenfläche (10) jedes Lagers (9) eine Nut (42) aufweist, die zur Aufnahme eines elektrischen Leiters (35) dient, wobei der elektrische Leiter (35) eine elektrisch leitfähige Verbindung zwischen dem Lager (9) und dem Walzenträger (7) herstellt, so dass eine elektrostatische Aufladung der Andrückwalze (4) verhinderbar ist.

9. Vorrichtung (1) nach einem der vorherigen Patentansprüche, wobei jedes Lager (9) ausgehend von einem Ende (20, 21) der Andrückwalze (4) einen ersten Außendurchmesserbereich (24) mit einem ersten Durchmesser (28), einen zweiten Außendurchmesserbereich (25) mit einem zweiten Durchmesser (29), einen dritten Außendurchmesserbereich (26) mit einem dritten Durchmesser (30) und einen vierten Außendurchmesserbereich (27) mit einem vierten Durchmesser (31) aufweist und wobei zwischen dem dritten Außendurchmesserbereich (26) und dem vierten Außendurchmesserbereich (27) eine erste Stufe (32) als Anschlag für einen Schutzring (33, 40) dient.

10. Vorrichtung (1) nach Patentanspruch 7, aufweisend mindestens einen Schutzring (33, 40) mit einem Anschlagsbereich (34), wobei der mindestens eine Schutzring (33, 40) bei einer Verschiebung der Andrückwalze (4) in einer Axialrichtung (19) der Andrückwalze (4) mit dem Walzenträger (7) in Kontakt kommt, so dass eine weitere Verschiebung der Andrückwalze (4) verhindert wird.

11. Aufspulmaschine (36), aufweisend eine Vorrichtung nach einem der vorhergehenden Patentansprüche.

## Claims

1. Device (1) for pressing a thread (2) onto a spool (3), having a contact pressure roller (4) having a thread-guiding portion (5) as well as a roller support (7),
wherein the contact pressure roller (4) has a first end (20) having a first bearing portion (6) which is mounted in a first receptacle (8) of the roller support (7), and a second end (21) having a second bearing portion (22) which is mounted in a second receptacle (9) of the roller support (7), wherein the contact pressure roller (4) in the region of the first bearing portion (6, 22) has a first bearing (9) having an external face (10), and in the region of the second bearing portion (22) has a second bearing (39) having an external face (10), wherein one spring-damper element (11, 23) is in each case disposed on the external face (10) of the first bearing (9, 39) and of the second bearing (39),
wherein the contact pressure roller (4) with the bearings (9, 39) and the spring-damper elements (11, 23) is mounted so as to be rotatable in the receptacles (8, 38) of the roller support (7), wherein each spring-damper element (11, 23) is configured for fastening the contact pressure roller (4) axially and radially relative to the roller support (7) by way of an elastic stiffness, **characterized in that** each spring-damper element (11, 23) has an elastic layer (14) disposed between an inner sleeve (12) and an outer sleeve (13), and **in that** each spring-damper element in relation to the outer sleeve (13) has at least one elastic spring detent (45, 46) disposed on the inner sleeve (12).

2. Device according to Patent Claim 1, wherein the elastic layer (14) has a predetermined radial stiffness in the range from 1000 N/mm to 8000 N/mm.

3. Device according to Patent Claim 1 or 2, wherein the elastic layer (14) has a predetermined axial stiffness in the range from 150 N/mm to 1200 N/mm.

4. Device according to one of the preceding patent claims, wherein each receptacle (8, 38) of the roller support (7) has a bearing half shell (47, 48) that is releasably connected to the roller support (7).

5. Device (1) according to one of the preceding patent claims, wherein each spring-damper element (11, 23) on the external face (10) of the bearing (9) has a bearing face (15) having a length (16) of 5 mm to 50 mm in the axial direction (19) of the contact pressure roller (4).

6. Device (1) according to one of the preceding patent claims, wherein each spring-damper element (11, 23) in the axial direction (19) of the contact pressure roller (4) is disposed so as to be substantially centric on the external face (10) of the bearing (9, 39).

7. Device (1) according to one of the preceding patent claims, wherein a first spring-damper element (11) is disposed in the first bearing portion (6), and a second spring-damper element (23) is disposed in the second bearing portion (22), and wherein the first spring-damper element (11) has a lower elastic stiffness than the second spring-damper element (23).

8. Device (1) according to one of the preceding patent claims, wherein the external face (10) of each bearing (9) has a groove (42) which serves for receiving an electric conductor (35), wherein the electric conductor (35) establishes an electrically conductive connection between the bearing (9) and the roller support (7) such that electrostatic charging of the contract pressure roller (4) is preventable.

9. Device (1) according to one of the preceding patent claims, wherein each bearing (9), proceeding from one end (20, 21) of the contact pressure roller (4), has a first external diameter region (24) having a first diameter (28), a second external diameter region (25) having a second diameter (29), a third external diameter region (26) having a third diameter (30), and a fourth external diameter region (27) having a fourth diameter (31), and wherein a first step (32) between the third external diameter region (26) and the fourth external diameter region (27) serves as a detent for an annular protection (33, 40).

10. Device (1) according to Patent Claim 7, having at least one annular protector (33, 40) having a detent region (34), wherein the at least one annular protector (33, 40) in a displacement of the contact pressure roller (4) in an axial direction (19) of the contact pressure roller (4) contacts the roller support (7) such that any further displacement of the contact pressure roller (4) is prevented.

11. Take-up winding machine (36) having a device according to one of the preceding patent claims.

## Revendications

1. Dispositif (1) servant à presser un fil (2) contre une bobine (3), présentant un rouleau de pression (4) avec une partie guide-fil (5) ainsi qu'un support de rouleau (7),
dans lequel le rouleau de pression (4) présente une première extrémité (20) avec une première partie de palier (6), qui est montée dans un premier logement (8) du support de rouleau (7), et une deuxième extrémité (21) avec une deuxième partie de palier (22), qui est montée dans un deuxième logement (9) du support de palier (7),
dans lequel le rouleau de pression (4) présente dans la région de la première partie de palier (6, 22) un premier palier (9) avec une face extérieure (10) et dans la région de la deuxième partie de palier (22) un deuxième palier (39) avec une face extérieure (10),
dans lequel un élément d'amortisseur à ressort (11, 23) est disposé respectivement sur la face extérieure (10) du premier palier (9, 39) et du deuxième palier (39),
dans lequel le rouleau de pression (4) est monté de façon rotative avec les paliers (9, 39) et les éléments d'amortisseur à ressort (11, 23) dans les logements (8, 38) du support de palier (7),
dans lequel chaque élément d'amortisseur à ressort (11, 23) est configuré pour fixer le rouleau de pression (4) radialement et axialement par rapport au support de palier (7) avec une rigidité élastique,
**caractérisé en ce que** chaque élément d'amortisseur à ressort (11, 23) présente une couche élastique (14) disposée entre une douille intérieure (12) et une douille extérieure (13), et **en ce que** chaque élément d'amortisseur à ressort présente au moins une butée de ressort élastique (45, 46) disposée sur la douille intérieure (12) en face de la douille extérieure (13).

2. Dispositif selon la revendication 1, dans lequel la couche élastique (14) présente une rigidité radiale prédéterminée dans la plage de 1000 N/mm à 8000 N/mm.

3. Dispositif selon une revendication 1 ou 2, dans lequel la couche élastique (14) présente une rigidité axiale prédéterminée dans la plage de 150 N/mm à 1200 N/mm.

4. Dispositif selon l'une quelconque des revendications précédentes, dans lequel chaque logement (8, 38) du support de rouleau (7) présente une demi-coquille de coussinet (47, 48) assemblée de façon séparable au support de rouleau (7).

5. Dispositif (1) selon l'une quelconque des revendications précédentes, dans lequel chaque élément d'amortisseur à ressort (11, 23) présente sur la face extérieure (10) du palier (9) une face d'appui (15) avec une longueur (16) de 5 mm à 50 mm dans une direction axiale (19) du rouleau de pression (4).

6. Dispositif (1) selon l'une quelconque des revendications précédentes, dans lequel chaque élément d'amortisseur à ressort (11, 23) est disposé dans la direction axiale (19) du rouleau de pression (4) essentiellement au milieu sur la face extérieure (10) du palier (9, 39).

7. Dispositif (1) selon l'une quelconque des revendications précédentes, dans lequel un premier élément d'amortisseur à ressort (11) est disposé dans la première partie de palier (6) et un deuxième élément d'amortisseur à ressort (23) est disposé dans la deuxième partie de palier (22), et dans lequel le premier élément d'amortisseur à ressort (11) présente une plus faible rigidité élastique que le deuxième élément d'amortisseur à ressort (23).

8. Dispositif (1) selon l'une quelconque des revendications précédentes, dans lequel la face extérieure (10) de chaque palier (9) présente une rainure (42), qui sert pour loger un conducteur électrique (35), dans lequel le conducteur électrique (35) établit une liaison électriquement conductrice entre le palier (9) et le support de rouleau (7), de telle manière qu'une charge électrostatique du rouleau de pression (4) puisse être empêchée.

9. Dispositif (1) selon l'une quelconque des revendications précédentes, dans lequel chaque palier (9) présente, à partir d'une extrémité (20, 21) du rouleau de pression (4), une première zone de diamètre extérieur (24) avec un premier diamètre (28), une deuxième zone de diamètre extérieur (25) avec un deuxième diamètre (29), une troisième zone de diamètre extérieur (26) avec un troisième diamètre (30) et une quatrième zone de diamètre extérieur (27) avec un quatrième diamètre (31) et dans lequel un premier gradin (32) entre la troisième zone de diamètre extérieur (26) et la quatrième zone de diamètre extérieur (27) fait office de butée pour une bague de protection (33, 40).

10. Dispositif (1) selon la revendication 7, présentant au moins une bague de protection (33, 40) avec une zone de butée (34), dans lequel ladite au moins une bague de protection (33, 40) vient en contact avec le support de rouleau (7) lors d'un déplacement du rouleau de pression (4) dans une direction axiale (19) du rouleau de pression (4), de telle manière qu'un autre déplacement du rouleau de pression (4) soit empêché.

11. Machine de bobinage (36), présentant un dispositif selon l'une quelconque des revendications précédentes.
